(19) Europäisches Patentamt
European Patent Office
Office européen des brevets

(11) **EP 3 800 764 A1**

(12) **EUROPEAN PATENT APPLICATION**

(43) Date of publication:
    **07.04.2021 Bulletin 2021/14**

(51) Int Cl.:
    ***H02J 50/00*** (2016.01)    ***H02J 50/12*** (2016.01)

(21) Application number: **19214973.0**

(22) Date of filing: **10.12.2019**

(84) Designated Contracting States:
    **AL AT BE BG CH CY CZ DE DK EE ES FI FR GB
    GR HR HU IE IS IT LI LT LU LV MC MK MT NL NO
    PL PT RO RS SE SI SK SM TR**
    Designated Extension States:
    **BA ME**
    Designated Validation States:
    **KH MA MD TN**

(30) Priority: **02.10.2019 GB 201914209**

(71) Applicant: **University of West Bohemia
    30100 Pilsen (CZ)**

(72) Inventors:
    • **Kindl, Vladimír**
      **33101 Plasy (CZ)**
    • **Turjanica, Pavel**
      **33901 Klatovy (CZ)**
    • **Pusman, Lukás**
      **26727 Podbrdy (CZ)**
    • **Jára, Martin**
      **30100 Plzen (CZ)**
    • **Kavalír, Tomá**
      **35801 Kraslice (CZ)**

(74) Representative: **CSY London
    10 Fetter Lane
    London EC4A 1BR (GB)**

(54) **WIRELESS POWER SUPPLY**

(57)    A wireless power transmission system comprising: an alternating current electrical power supply a transmitter comprising a first electromagnetic circuit comprising a first core with a surrounding first antenna element operatively coupled to the power supply; and a receiver comprising a second electromagnetic circuit comprising a second core with a surrounding second antenna element; characterised in that the receiver and transmitter are in loose resonant coupling.

FIGURE 1

## Description

## Field of the Invention

This invention relates to wireless power transmission using an inductive coupling. The invention finds use in particular in supplying power to electronic door/window systems, in particular locks.

## Background of the Invention

It is known in the art of electrically powered systems, in particular door/window arrangements, that wireless power transmission can provide an effective and convenient means to power devices installed in the door leaf. It is common for electrical components to be installed in the door frame to provide a power source across the gap between door frame and door/window leaf. Such systems are typically used for powering door equipment such as locks and other apparatus such as sensors, cameras, screens or window equipment such as electronic blinds, shutters, jalousie etc. They can also be employed to power communication pads, combination locks and other electronic devices.

Various methods of supplying power to a device located within a door leaf are known in the art. The most basic and well known of these is an external power source fed toward the door/window frame. From the frame to the leaf, a flexible cable can be run along the hinge area and incorporated into the moving part. This is intended to provide a constant, uninterrupted source of power. Problems with such systems include damage to the cable due to repetitive opening and closing. Another problem is the complexity of installing such a system and ease of accessibility for maintenance.

An alternative arrangement features a conductive connection that uses switching electrical contacts located along the side of the frame that meets the locking mechanism. Thus, when the door/window is closed, the electrical contacts will touch, completing an electrical circuit and allowing for power and/or signals to be transferred between the two components. This reduces the amount of wiring needed within the door leaf. However, the mechanism in the door/window needs a temporary power source that can provide power to the system installed inside while the door/window open/unconnected. Further, such a system is vulnerable to tampering, as the electrical contact can be broken by sliding a laminar object (e.g. a credit card) between the door frame and leaf. Over time the contact quality tends to decrease; additional problems like dust or oil from hinges also interfere with electrical conduction.

Wireless power transmission is known for use in supplying power to systems installed in doors. Generally, this will involve using a radiofrequency (RF) inductive coupling, a component installed in the door frame around the locking portion and a corresponding component installed in the door itself, again near the locking porting. Typically, the mechanism in the door hinge will be a transmitter and the component in the door leaf will be a receiver. The transmitter is connected to a power source and can then wirelessly power the corresponding receiver in the door leaf when it is in range in the closed position.

A phenomenon known as inductive coupling is commonly used to achieve this wireless power transmission. The transmitter located in the door frame is arranged to have a magnetic core with a wire coil wrapped around it. A similar set up is installed in the door leaf. When an electrical current is applied to the transmitter in the door frame, it will create a magnetic field around said transmitter. This will induce an electromotive force in the second inductive coil and thus can induce an electric current without the need of a physical connection.
Current wireless power transmission systems suffer from low energy transfer efficiency. The main reason is the distance between transmitter and receiver, which must be covered by system. Transmissions of energy in actual systems can only occur over a small distance and are associated with very high operating power consumption. This leads to systems that require very precise alignment when installing the two components in the door to ensure that the power transmission is as effective as possible. It also means that the components may be bulky in what is already quite a limited space for installation. The prior art discloses systems which attempt to overcome this problem mechanically (after closing of door the transmitting coil is mechanically moved closer to receiving coil). This low efficiency poses a bigger problem as more and more technology is installed in doors, for example in offices and hotels employing screens, more sophisticated locking, keypads etc. This creates the need for a more efficiency means of transmitting power to a door leaf.

Prior art wireless power supplies for electronic door systems have generally used the principle of inductive coupling to transmit power to door leaves. The advantages of such systems include ease of installation as compared to hard wired systems, and reduced risk of damage to components, as they are completely hidden/enclosed within the door frame and door leaf. Having a separate temporary power source within the door is also known, so as to allow the electronics to continue to operate when the door is open and too far out of range of the transmitting portion.

It would be desirable to provide a wireless power transmission system for use in *inter alia* doors which addresses the problems in known systems. In particular, it would be desirable to provide a system which does not require such precise alignment of transmitter and receiver components. Further, it would be desirable to provide systems which have a greater range than known systems. Further, it would be desirable to provide systems which have a higher power transmission efficiency compared to those known in the art. And further, it would be desirable to provide system which will automatically keep transmission efficiency at the highest possible level even during changes of mechanical conditions in time (i.e. relative movement of the door and frame).

The present invention addresses these and other problems.

## Summary of the Invention

According to a first embodiment, the invention provides a wireless power transmission system comprising: an alternating current electrical power supply a transmitter comprising a first electromagnetic circuit comprising a first antenna element operatively coupled to the power supply; and a receiver comprising a second electromagnetic circuit comprising a second antenna element;

characterized in that the receiver and transmitter are in loose resonant coupling.

According to a second embodiment, there is provided a transmitter for use in a wireless power transmission system of the invention.

According to a third embodiment, there is provided a receiver for use in a wireless power transmission system of the invention.

According to a third embodiment, there is provided a door/window comprising a frame and a leaf, wherein the frame is provided with a transmitter comprising a first electromagnetic circuit comprising a first core with a surrounding first antenna winding operatively coupled to the power supply; and the leaf is provided with a receiver comprising a second electromagnetic circuit comprising a second core with a surrounding second antenna winding; characterized in that the receiver and transmitter are in loose resonant coupling.

## Detailed description of the preferred embodiments

Preferably the wireless power transmission system will be installed in a door and door frame. The transmitter may be installed in a door frame and the receiver may be installed in the door leaf.

In a preferred embodiment, the first electromagnetic circuit, or the second electromagnetic circuit or both comprise a core with a surrounding antenna element.

In one embodiment the wireless power transmission device includes an electromagnetic circuit wherein on or both of the first and second cores are E-shaped magnetic cores.

E-cores are known. Generally, E-cores have three legs extending generally perpendicular from a connecting element. Preferably, the E-core comprises an antenna element wound about one of the legs. More preferably, the antenna element is wound about the central leg.

In another embodiment of the present invention the wireless power transmission device includes an electromagnetic circuit wherein the core of said electromagnetic circuit is a C-shaped magnetic core.

In some alternative preferred embodiments, the first electromagnetic circuit, or the second electromagnetic circuit or both do not have a core.

The magnetic cores may be formed from any type of magnetic material with a high magnetic permeability and ability to confine and guide magnetic fields. Preferably, they are made of ferromagnetic metal such as iron, or ferromagnetic compounds such as ferrites. Most preferably, the cores are ferrite cores. Ferrites are ceramic material made by mixing and firing large proportions iron(III) oxide blended with small proportions of one or more additional metallic elements, such as barium, manganese, nickel, and zinc. They are both electrically non-conductive, meaning that they are insulators, and ferromagnetic, meaning they can easily be magnetized or attracted to a magnet. Preferable ferrite materials are manganese-zinc ferrite (MnZn, with the formula $Mn_aZn_{(1-a)}Fe_2O_4$) and nickel-zinc ferrite (NiZn, with the formula $Ni_aZn_{(1-a)}Fe_2O_4$). NiZn ferrites exhibit higher resistivity than MnZn, and are therefore more suitable for frequencies above 1 MHz.

Preferably, the antenna element of the wireless power transmission device is comprised of multi strand litz wire, or stacked layers of printed circuit boards (PCBs). Litz wire consists of many thin wire strands, individually insulated and twisted or woven together, following one of several carefully prescribed patterns, often involving several levels (groups of twisted wires are twisted together, etc.). The result of these winding patterns is to equalize the proportion of the overall length over which each strand is at the outside of the conductor. This has the effect of distributing the current equally among the wire strands, reducing the resistance. Litz wire is used in high Q inductors for radio transmitters

Preferably, the antenna elements are multilayer printed circuit board ("PCB") motives that simulate an antenna formed from wire with precisely minimised parasitic wire-wire capacitance. The PCB includes a plurality of alternating conductor and insulating layers. The conductor layers are interconnected such that they cooperatively form the antenna. Each conductor layer includes a trace that follows the desired shape and is divided to provide a plurality of discrete conductor segments. In one embodiment, each conductive layer of the PCB includes a generally spiral-shaped trace having a plurality of electrically discrete segments. The segments are electrically connected across layers to provide a plurality of current flow paths (or filaments) that undulate between the layers.

The conductive motifs of said individual PCB boards may be printed so that the ends of said conductors do not meet and do not form a complete circuit.

The PCBs of said antenna elements may have different printed conductive motifs on each layer.

The PCBs of said antenna elements may be stacked so that the start of one conductive motif on a first flat element connects to the end of a conductive motif on a neighboring flat element. In the same embodiment of the present invention, the stacked layers of flat element PCBs may be arranged so that the conductive motifs on adjacent PCB elements are not overlapping. In one embodiment of the present invention, the magnetic circuit of the receiving portion may have a resonant circuit.

The receiver and transmitter of the inventive system are loosely resonantly coupled. Resonant coupling or magnetic phase synchronous coupling is a phenomenon where the coupling becomes stronger when the "secondary" (load-bearing) side of the loosely coupled structure resonates.

As used herein, the term "loosely coupled" refers to a transmitter and receiver that have a coupling coefficient $k$ of less than 0.2, preferably less than 0.1, more preferably less than 0.01.

The coupling coefficient is the ratio of the open-circuit actual voltage ratio to the ratio that would obtain if all the flux coupled from one circuit to the other.

The claimed solution due to physical principle has a different design, different from known solutions. This lies in the difference between the commonly described use of magnetic inductive coupling, which primarily has the energy transfer based on the principle of Faraday's induction law $u_i = -N\frac{d\Phi}{dt}$ versus use of electromagnetic RF field defined by Poynting vector $\vec{S} = \vec{E} \times \vec{H}$. The present invention makes use of impedance-matched antenna structures (vs. inductive coils) with higher efficiency of contactless power transmission at significantly higher distances. As a result, practically usable electric power transmission is possible at distances up to 20 cm, depending on the antenna structure, power and frequency. Known solutions allow transmission over a significantly shorter distance by approximately 1-2 orders of magnitude. Thanks to the use of different physical principles in the area of radio frequencies at the level above few hundreds of kHz, up to 30 MHz, the present invention overcomes the problems associated with existing systems with appropriate physical limits (efficiency decreases rapidly with the distance to which energy is transmitted and no transfer is possible beyond a few millimeters).

Accordingly, the present invention solves the problem of wireless transmission energy in the transmission chain (transmitter => transmit antenna structure => receiving antennas => rectifier) with respect to S parameters and wave impedance.

The use of the present invention described herein renders it possible to transmit electricity efficiently over a significantly greater distance with far less demanding alignment of the transmitter and receiver, a larger gap over which energy may be transmitted compared to tightly coupled resonant circuits.

The system of the invention comprises an alternating current (AC) electrical power supply. Preferably, the power supply is adapted to produce AC signals at radio frequency, preferably in the frequency range of between 100 kHz to 13.5 MHz.

In one embodiment of the present invention the transmitter and receiver may be provided with at least one common communication channel.

Preferably in the present invention the device may be adapted to modulate the transmitted electrical energy to transmit data.

**Brief description of the drawings**

Figure 1 is a schematic representation of door and door frame with the transmitting, receiving and electronic components installed

Figure 2 is a schematic view of the flat elements arranged to provide the antenna element for the present invention.

Figure 3 shows the elements contained in the transmitter and the receiver.

Figure 4 shows electromagnetic flow in E-shape and C-shape circuit and possible antenna motives placement.

Figure 5 shows antenna configuration used for wireless power transmission without a core.

**Detailed description of the preferred embodiments with reference to the figures.**

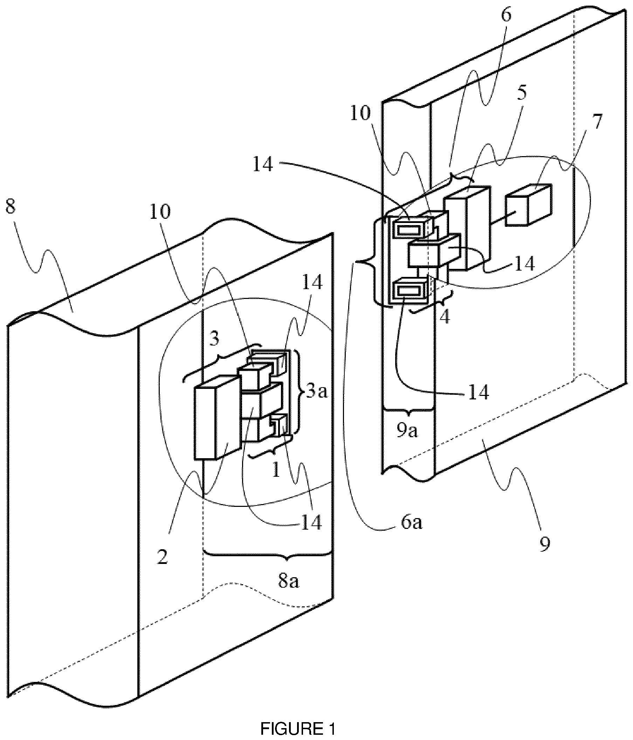

As illustrated, Figure 1 shows a door assembly which is comprised of a door leaf 9 and a door frame 8. Door leaf 9 is hinged so that when closed, edge 9a is flush with edge 8a of door frame 8. Located in door frame 8 is transmitter 3. A corresponding receiver 6 is installed in the door leaf. The transmitter 3 and receiver 6 are disposed so that the transmitter face 3a of transmitter 3 aligns with the receiver face 6b of receiver 6 when door leaf 9 is closed in door frame 8. Ideally the transmitter 3 and receiver 6 will be installed in close proximity the locking mechanism/handle of the door will be located. The locking mechanism and transmitter/receiver may be integrated together. This ensures a compact and easy to install design that can be used to power a door locking mechanism.

The door frame 8 in Figure 1 includes the electronics component 7. In this embodiment electronics component 7 is a locking mechanism. This could also be a screen, camera or other electronic device installed on the door leaf.

Transmitter 3 is comprised of two portions, the transmitting antenna element 1 and the transmitter electronics 2. Likewise, the receiver portion 6 is comprised of two portions, the receiving antenna element 4 and the receiver electronics 5.

The transmitter and receiver are disposed in the door frame such that the transmitting antenna element 1 is lined up with the receiving antenna element 4.

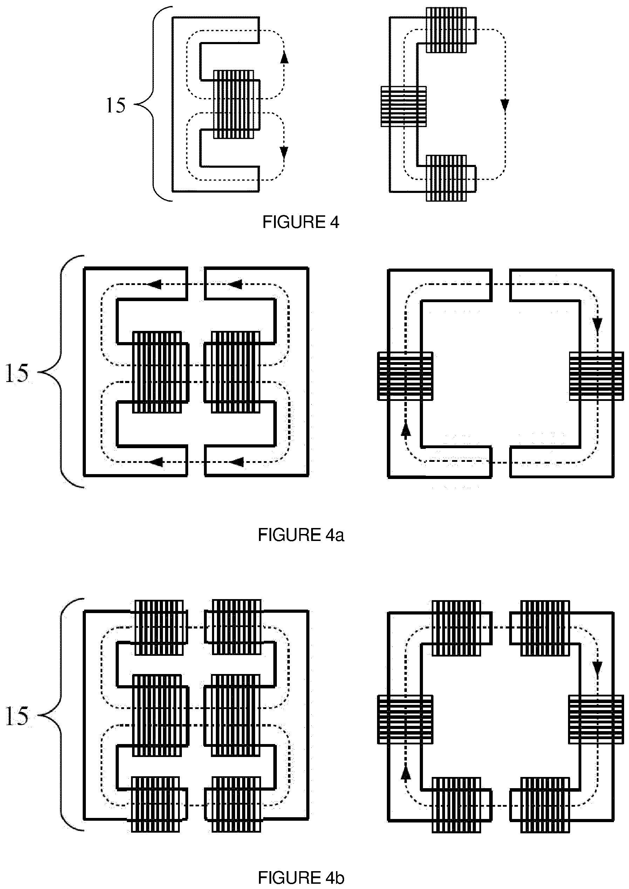

The transmitting antenna element 1 comprises an antenna 14 and a magnetic core 10. The receiving antenna element 4 includes a magnetic core 10 and an antenna 14. Figure 1 shows an embodiment wherein the antenna system 15 created by transmitting part 1 and receiving part 4 (see Figure 4)is based on an C-shaped ferrite core. The antenna 14 is disposed in three parts around the centre leg of this C-shaped ferrite core. The antenna 14 for both the transmitting antenna and receiving antenna are arranged this way for each element. The antenna 14 may be in the shape of a coil, spiral or helix.

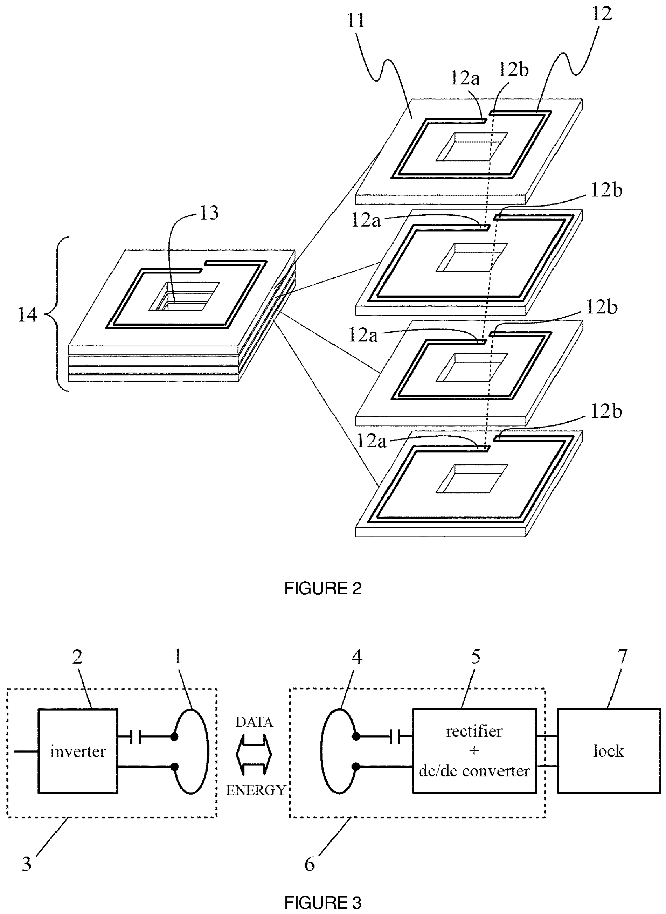

Alternatively, Figure 2 shows the antenna 14 used in this embodiment. The antenna 14 is constructed by layering PCB (printed circuit boards) to provide the winding of the transmitting antenna. On each PCB 11 is a conductive motif 12 that wraps around a central aperture 13. In this embodiment, the conductive motive 12 is printed in a square-like shape with ends 12a and 12b. 12a and 12b do not meet or touch one another and thus provide a gap. They are arranged so that when stacked face to face with other PCBs 11 with conductive motifs 12, the end of one conductive motif 12a on one element meets the end of another conductive motif 12b on the element below. Thus, the conductive motif 12 of two adjacent flat elements 11 have a non-overlapping layout of the conductive motif 12.

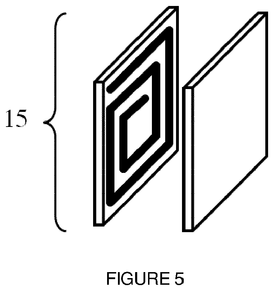

Figure 5 shows an alternative arrangement of the transmitting antenna and receiving antenna, which may operate in the absence of a core, constructed of a single layer or stacked layering PCB.

Figure 2 shows these elements 11 stacked together to provide and antenna 14. The elements 11 can be stacked together so that the windings of antenna 14 gradually increase in circumference, decrease, or vary. For example, the windings of antenna element 14 may increase in circumference and then decrease, as long as adjacent motifs do not overlap. They are stacked so that the central aperture 13 is lined up and can be used to dispose on the magnetic core 10. Figure 1 shows this arrangement of elements 11 stacked and disposed on the central leg of an C-shaped core 10. Going back to Figure 1, when disposed as described above, these elements 11 on the E-shaped core 10 of transmitter 3 and receiver 4 will line up when door 9 is closed in door frame 8.

The advantage of such an arrangement of the antenna 14 is that in this arrangement, the conductive motifs 12 of the flat elements 11 are interconnected in series. This design achieves a high operation inductance while maintaining small parasitic capacitance. With normal inductive windings, the electric field between the winding may cause an electric charge to be stored between them. This can be limited with the use of said PCB layered elements 11. It is advantageous if the conductive motifs 12 of the two adjacent flat elements 11 have a non-overlapping shape. A winding arrangement of antenna 14 like this will significantly suppress the parasitic capacitance which has a negative impact on the operating parameters of the resonant circuit.

In operation, an electrical current is applied to transmitter 3, the transmitter antenna 14 will generate an electromagnetic field. This electromagnetic field will act upon the receiving antenna 4 and induce a voltage across the receiving antenna to power a mechanism/charge a battery etc. To boost the signal, resonant inductive coupling is used to increase the efficiency of power transmission and increase the distance between the transmitter 3 and receiver 6.

In one embodiment, a resonant circuit may be added to the receiver antenna 64. This will allow the receiver antenna to be tuned to the transmitter antenna to produce a resonant coupled loop. In another embodiment, a resonant control circuits may be added to the receiver antenna 4 and the transmitting antenna 1. Thus, when a rapidly oscillating current is applied to the transmitter antenna in the transmitter 3, it creates a magnetic field at a certain frequency. The receiving antenna 4 is automatically tuned to this frequency and will couple to this magnetic field. In case that energy transfer is not optimal and receiving resonant control circuits are not able to tune best way, transmitting resonant control circuits can adjust transmitted signal to optimize tuning conditions for receiver. This allows the receiving antenna to convert the oscillating electromagnetic field into an electrical current. Thus, the transmitter 3 and receiver 6 can transfer power easily, over a greater range without the need of precise alignment as in the prior art.

Other embodiments may include a E or C-shaped core with the stacked PCB boards or litz winding arranged differently, such as along the central portion of the C-shaped core, on each leg of a core or in different orientations on the E-shaped core, or a face to face arrangement of antennae operating without the presence of a core.

The electronics 2 of a transmitter 3 is a source of a high frequency signal for powering the transmitting antenna element 1. The high frequency signal is in the frequency range of 100 kHz to 30 MHz

Figure 3 shows a more detailed schematic drawing of what is contained in the transmitter 3 and receiver 6. Transmitter 3 contains transmitter electronics component 2. Within the transmitter electronics component 2 is an inverter, or an electronic oscillator. The direct current (DC) applied to this oscillator is changed to an alternating current (AC) at a frequency in the range of 100 kHz to 30 MHz. This oscillating current then inducing an oscillating electromagnetic field around transmitter antenna 1. Receiving antenna 4 couples itself with this oscillating magnetic field. A voltage is then induced across antenna 4 and the rectifier of receiver electronic component 5 then chances this incoming alternating current into a direct current to be used to power the locking mechanism or change to temporary battery.

In addition to this, the wireless power transmission device may also be provided with at least one common communication data channel. This is particularly useful for transmitting auxiliary data signals such as data, diagnostic or service signals. An example of this could be a coded entry system installed on the door leaf. Alternatively, the device may be adapted to modulate the transmitted electrical energy for the purpose of data transmission. This solution is characterized by higher robustness, since there is no need to use a separate, self-operating antenna to communicate. This may result in a substantial reduction in the system dimensions.

## Claims

1. A wireless power transmission system comprising: an alternating current electrical power supply a transmitter comprising a first electromagnetic circuit comprising a first antenna element operatively coupled to the power supply; and a receiver comprising a second electromagnetic circuit comprising a second antenna element;
   **characterized in that** the receiver and transmitter are in loose resonant coupling.

2. A wireless power transmission system according to claim 1, wherein the first electromagnetic circuit, or the second electromagnetic circuit or both comprise a core with a surrounding antenna element.

3. A wireless power transmission system according to claim 1 or 2 wherein the coupling coefficient, k, between the transmitter and the receiver is less than 0.2, preferably less than 0.1, more preferably less than 0.01.

4. A system according to any one of claims 1 to 3 wherein the transmitter is installed in a door or window frame and the receiver is installed in the door or window leaf.

5. A wireless power transmission system of any one of claims 2 to 4 the first core or second core or both are E-shaped.

6. A wireless power transmission system of any one of claims 2 to 4 wherein the first core or second core or both are C-shaped.

7. A wireless power transmission system of any preceding claim wherein the first antenna element or the second antenna element or both are made from Litz wire

8. A wireless power transmission system of any preceding claim wherein the first antenna element or second inductive element or both are comprised of at least one layer of printed circuit boards (PCBs).

9. A wireless power transmission system of claim 8 wherein the elements are stacked so that the start of one conductive motif on a first flat element connects to the end of a conductive motif on a neighboring flat element.

10. A wireless power transmission system of any preceding claim wherein the alternating current electrical power supply operates at a frequency in the range of 100 kHz to 30 MHz.

11. The wireless power transmission system of any preceding claim wherein the transmitter and receiver are provided with at least one common communication channel.

12. The wireless power transmission system of any preceding claim wherein the device is adapted to modulate the transmitted electrical energy to transmit data.

13. The wireless power transmission system of any preceding claim wherein the receiver is equipped with resonant control circuits to automatically tune the resonant loop to keep best power transfer capabilities.

14. The wireless power transmission system of any preceding claim wherein the transmitter is equipped with resonant control circuits to automatically tune the resonant loop to keep best power transfer capabilities.

15. The wireless power transmission system of any preceding claim wherein the transmitter and receiver are equipped with resonant control circuits to automatically tune the resonant loop to keep best power transfer capabilities, which are synchronized via communication channel.

FIGURE 1

FIGURE 2

FIGURE 3

FIGURE 4

FIGURE 4a

FIGURE 4b

15

FIGURE 5

Europäisches
Patentamt

European
Patent Office

Office européen
des brevets

## EUROPEAN SEARCH REPORT

Application Number

EP 19 21 4973

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/012966 A1 (DAVIS ROY HOWARD [US]) 14 January 2016 (2016-01-14) | 1,3,10 | INV. H02J50/00 H02J50/12 |
| Y | * paragraphs [0066], [0067], [0069]; figure 15 * | 2,4-7 | |
| X | US 2017/237302 A1 (SORGE JEFFREY JOHN [US]) 17 August 2017 (2017-08-17) * abstract; figures 1-4 * * paragraphs [0042], [0045] * | 1,3,10 | |
| X | NAM ISAAC ET AL: "General optimal design method for series-series resonant tank in loosely-coupled wireless power transfer applications", 2014 IEEE APPLIED POWER ELECTRONICS CONFERENCE AND EXPOSITION - APEC 2014, IEEE, 16 March 2014 (2014-03-16), pages 857-866, XP032590815, DOI: 10.1109/APEC.2014.6803408 * the whole document * | 1,3,10 | |
| | | | TECHNICAL FIELDS SEARCHED (IPC) |
| Y | DE 102 35 947 A1 (DIEHL AKO STIFTUNG GMBH & CO [DE]) 19 February 2004 (2004-02-19) * abstract; figure 2 * | 2,4,6 | H02J E05D E05B |
| Y | JP 2003 143852 A (SONY CORP) 16 May 2003 (2003-05-16) * abstract; figures 2,3 * * paragraph [0054] * | 5,7 | |

~~The present search report has been drawn up for all claims~~

| Place of search | Date of completion of the search | Examiner |
|---|---|---|
| Munich | 7 April 2020 | Braccini, Roberto |

Europäisches
Patentamt

European
Patent Office

Office européen
des brevets

Application Number

EP 19 21 4973

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-7, 10

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

Application Number

EP 19 21 4973

The Search Division considers that the present European patent application does not comply with the requirements of unity of invention and relates to several inventions or groups of inventions, namely:

    1. claims: 1-7, 10

        Wireless power transmission system comprising transmitter
        and receiver having core with surrounding antenna elements
                        ---

    2. claims: 8, 9

        Wireless power transmission system comprising stacked planar
        antennas
                        ---

    3. claims: 11, 12

        Wireless power transmission system comprising common
        communication channel
                        ---

    4. claims: 13-15

        Wireless power transmission system comprising automatic
        frequency tuning circuits
                        ---

## ANNEX TO THE EUROPEAN SEARCH REPORT
## ON EUROPEAN PATENT APPLICATION NO.

EP 19 21 4973

This annex lists the patent family members relating to the patent documents cited in the above-mentioned European search report.
The members are as contained in the European Patent Office EDP file on
The European Patent Office is in no way liable for these particulars which are merely given for the purpose of information.

07-04-2020

| Patent document cited in search report | | Publication date | Patent family member(s) | | Publication date |
|---|---|---|---|---|---|
| US 2016012966 | A1 | 14-01-2016 | CN | 106575873 A | 19-04-2017 |
| | | | EP | 3170239 A1 | 24-05-2017 |
| | | | JP | 6619416 B2 | 11-12-2019 |
| | | | JP | 2017528100 A | 21-09-2017 |
| | | | KR | 20170033296 A | 24-03-2017 |
| | | | US | 2016012966 A1 | 14-01-2016 |
| | | | WO | 2016010636 A1 | 21-01-2016 |
| US 2017237302 | A1 | 17-08-2017 | CN | 106852182 A | 13-06-2017 |
| | | | JP | 6489212 B2 | 27-03-2019 |
| | | | JP | 2017532944 A | 02-11-2017 |
| | | | US | 2017237302 A1 | 17-08-2017 |
| | | | WO | 2016073867 A1 | 12-05-2016 |
| DE 10235947 | A1 | 19-02-2004 | CN | 1487647 A | 07-04-2004 |
| | | | DE | 10235947 A1 | 19-02-2004 |
| | | | TR | 200301149 A2 | 23-02-2004 |
| JP 2003143852 | A | 16-05-2003 | NONE | | |

EPO FORM P0459

For more details about this annex : see Official Journal of the European Patent Office, No. 12/82